# EUROPÄISCHE PATENTANMELDUNG

(11) **EP 0 903 179 A1**
(43) Veröffentlichungstag der Anmeldung: **24.03.1999**
(21) Anmeldenummer: 97810682.1
(22) Anmeldetag: 18.09.1997
(51) Int. Cl.: B01L 3/02, F16K 15/14

(54) **Mikroventil**

(71) Anmelder: METROHM AG, 9100 Herisau (CH)
(72) Erfinder: Zähner, Paul, 9100 Herisau (CH)
(74) Vertreter: Hepp, Dieter

(57) **Zusammenfassung**

Ein Mikroventil (1) zum Dosieren einer Flüssigkeit, beispielsweise eines Titriermittels, besteht im wesentlichen aus einem Ventilkörper (10) mit einem Sitz (3) für eine Membran und einer solchen Membran (2). Das Mikroventil (1) weist zum Schutz der Membran (2) und des Sitzes (3) vor mechanischen Beschädigungen eine Abdeckung (4, 5; 15) auf, welche die Membran (2) und den Sitz (3) wenigstens teilweise umschliesst und abdeckt. Die Membran (2) wird zwischen dem Ventilkörper (10) und einem Abdeckteil (5) eingeklemmt und im Ventilkörper (10) gehalten.

## Beschreibung

Die Erfindung betrifft ein Mikroventil zum Dosieren einer Flüssigkeit und die Verwendung eines Mikroventils mit den Merkmalen des Oberbegriffs der unabhängigen Ansprüche. Solche Mikroventile werden insbesondere beim Titrieren zum Dosieren eines Titriermittels verwendet. Anwendungen finden sich aber auch bei anderen Feindosierungen, bei welchen Messgenauigkeiten im Mikroliterbereich gefordert sind.

Beim Titrieren wird einer Probeflüssigkeit ein Titriermittel so lange beigefügt, bis ein bestimmter Effekt beobachtet wird. Aus dem Verbrauch des Titriermittels lässt sich der Gehalt eines für diesen Effekt verantwortlichen Bestandteils der Probeflüssigkeit bestimmen. Die Messgenauigkeit hängt also im wesentlichen von der Genauigkeit ab, mit welcher der Verbrauch des Titriermittels ermittelt wird bzw. mit welcher das Titriermittel dosiert werden kann.

Häufig wird die Titration mit einer in die Probenflüssigkeit eingetauchten Bürettenspitze durchgeführt. Wenn das Titriermittel spezifisch schwerer ist als die Probenflüssigkeit, wenn das Titiermittel und die Probenflüssigkeit verschiedene Konzentrationen oder das Titriermittel und die Probenflüssigkeit an ihrer Grenzfläche verschiedene Geschwindigkeiten haben, kann die Probenflüssigkeit in die Bürettenspitze eintreten und das Titriermittel in die Probenflüssigkeit austreten. Dies kann zu Messungenauigkeiten führen.

Es ist bekannt, (beispielsweise beim Metrohm Titroprozessor 636), ein in der Art eines Einwegventils wirkendes Mikroventil zu verwenden, welches mit einer Membran verschlossen ist, die zwar Titriermittel austreten, aber keine Probeflüssigkeit eintreten lässt (Mikroventil für diffusionshindernde Bürettenspitzen von Metrohm, Produktenummer 6.2726.060). Aus der CH 660 131 ist es ausserdem bekannt, Bürettenspitzen mit einem Siphon zu versehen, welcher die Diffusion vermeiden soll. Bürettenspitzen mit Siphon verhindern die Diffusion von Titriermittel und Probenflüssigkeit verschiedener Konzentrationen nicht. Auch wird Diffusion durch verschiedene Geschwindigkeiten an der Grenzfläche nicht verhindert. Auch die Herstellung des oben genannten Mikroventils ist aufwendig, da die Membran mit hoher Präzision auf den vorderen Teil des Mikroventils aufgesetzt werden muss. Ein weiterer Nachteil bekannter Mikroventile kann darin liegen, dass die Membran und der Ventilsitz von aussen zugänglich sind, was bei unsachgemässer Handhabung zu einer erhöhten Anfälligkeit des Mikroventils für mechanische Beschädigungen führt. Ein Nachteil bekannter Mikroventile aus harten Werkstoffen kann auch darin liegen, dass die Membran mit relativ grossem Druck des Titriermittels geöffnet werden muss. Kleinste Beschädigungen am Ventilsitz und/oder an der Membran können aber bereits zu dem unerwünschten Eintreten von Probeflüssigkeit oder Ausfluss des Titriermittels führen.

Es ist die Aufgabe der vorliegenden Erfindung, die Nachteile des Bekannten zu vermeiden, insbesondere also ein Mikroventil zum Dosieren einer Flüssigkeit zu schaffen, das weniger anfällig gegen mechanische Beschädigungen ist und das auf einfache und wirtschaftliche Weise herstellbar ist.

Erfindungsgemäss werden diese Aufgaben mit einem Mikroventil mit den Merkmalen des kennzeichnenden Teils von Anspruch 1 gelöst.

Das Mikroventil weist eine Membran (meist aus einem weichen Kunststoff) und einen (jedenfalls vergleichsweise) harten Sitz für diese Membran auf. Zum Schutz der Membran und/oder des Sitzes vor mechanischen Beschädigungen weist das Mikroventil erfindungsgemäss eine Abdeckung auf. Die Abdeckung überdeckt die Membran und den Sitz für die Membran wenigstens teilweise.

Vorteilhaft besteht die Abdeckung aus einer umlaufenden Ringwand, welche die Membran und den Sitz umschliesst und gegebenenfalls aus einem Abdeckteil, welches die Oberfläche der Membran teilweise überdeckt. Die Membran sollte nicht vollständig durch das Abdeckteil bedeckt werden, damit Flüssigkeit noch austreten kann.

Ein besonders einfaches Ausführungsbeispiel ergibt sich, wenn die Membran mit dem Abdeckteil gleichzeitig gegen den Sitz gedrückt wird. Dazu kann das Abdeckteil mit einem in einem mittigen Bereich angeordneten Vorsprung versehen sein.

Besonders einfach ist das Mikroventil herstellbar, wenn das Abdeckteil an der Ringwand einrastbar ist. Die Ringwand kann beispielsweise mit einer Vertiefung mit einer Auflagefläche zur Aufnahme des Abdeckteils versehen sein. Vorteilhaft steht die Ringwand leicht über das in die Vertiefung eingesetzte Abdeckteil vor.

In einem bevorzugten Ausführungsbeispiel besteht das Mikroventil ausschliesslich aus dem Abdeckteil, einem den Sitz aufweisenden Ventilkörper und der Membran. Die Membran wird zwischen dem Abdeckteil und dem Ventilkörper gehalten. Der Ventilkörper und das Abdeckteil sind vorteilhaft einstückig als Kunststoffspritzgussteile ausgebildet. Ein derartiges Mikroventil lässt sich besonders einfach herstellen. Der Ventilkörper und das Abdeckteil werden gespritzt. Die Membran wird in den Ventilkörper auf den Sitz eingelegt und das Abdeckteil wird in die Vertiefung der Ringwand des Ventilkörpers eingerastet. Das Abdeckteil presst gleichzeitig die Membran gegen den Ventilsitz.

Das Abdeckteil ist vorteilhaft als Kreisring ausgebildet, welcher mit durch das Kreiszentrum verlaufenden Stegen versehen ist. Der Vorsprung zum Anpressen der Membran gegen den Sitz kann im Zentrum des Kreisrings angebracht sein.

Alternativ ist es auch denkbar, das Abdeckteil als mit Öffnungen versehene Kreisscheibe auszubilden.

In einem alternativen Ausführungsbeispiel ist es ausserdem denkbar, den Ventilkörper ohne umlaufende Ringwand auszubilden, und die Abdeckung zum Schutz der Membran als gewölbte Abdeckkappe auszubilden, welche die Membran und den Ventilsitz gleichzeitig überdeckt und umschliesst.

Die Erfindung wird im folgenden in Ausführungsbeispielen und anhand der Zeichnungen näher erläutert. Es zeigen:
- Figur 1: Querschnitt durch ein erfindungsgemässes Mikroventil,
- Figur 2: Explosionszeichnung des erfindungsgemässen Mikroventils im Querschnitt,
- Figur 3: Draufsicht auf die einzelnen Bestandteile des erfindungsgemässen Mikroventils,
- Figur 4: Draufsicht auf ein zusammengebautes Mikroventil,
- Figur 5: schematische Darstellung eines alternativen Ausführungsbeispiels eines Mikroventils im Querschnitt.

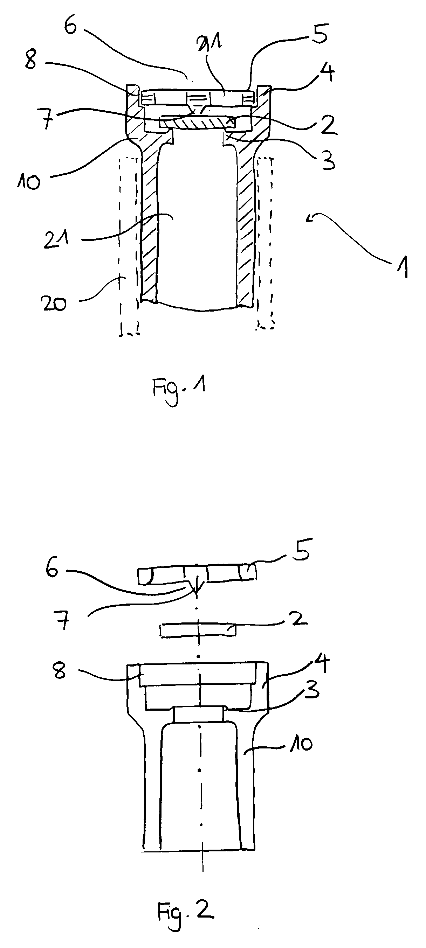

Das in Figur 1 gezeigte Mikroventil 1 besteht aus einem Ventilkörper 10, einer Membran 2 und einem Abdeckteil 5. Das Mikroventil 1 kann mit einem gestrichelt dargestellten Schlauch 20 mit einer Dosiervorrichtung für ein Titriermittel verbunden sein.

Der Ventilkörper 10 weist eine Öffnung 21 für den Durchfluss eines Titriermittels auf. Der Ventilkörper 10 weist ausserdem einen Sitz 3 auf, gegen welchen die Membran 2 anpressbar ist. Die Membran 2 wird mit einer bestimmten Vorspannung gegen den Sitz 3 angepresst. Die Öffnung 21 wird dadurch durch die Membran 2 geschlossen und erst geöffnet, sobald der Druck des Titriermittels in der Öffnung 21 einen vorbestimmbaren Wert übersteigt. Das Eintreten von Probeflüssigkeit von ausserhalb des Mikroventils 1 in das Innere wird dadurch vermieden.

Die Membran 2 wird mit dem Abdeckteil 5 gegen den Sitz 3 angedrückt. Das Abdeckteil 5 weist in einem mittigen Bereich 6 einen Vorsprung 7 auf, welcher gegen die Membran 2 gerichtet ist und diese anpresst. Das Abdeckteil schützt die Membran 2 und den Sitz 3 vor mechanischen Beschädigungen.

Der Ventilkörper 10 ist ausserdem mit einer umlaufenden Ringwand 4 versehen, welche den Sitz 3 und die Membran 2 umschliesst. Die Ringwand 4 weist eine Vertiefung 8 mit einer Auflagefläche 9 auf, auf welche das Abdeckteil 5 abgestützt werden kann. Das Abdeckteil 5 wird in der Vertiefung 8 eingerastet. Die Ringwand 4 steht leicht über das Abdeckteil 5 vor.

Auch die Ringwand 4 schützt Membran 2 und Sitz 3 vor Beschädigungen.

Sobald das Titriermittel in der Öffnung 21 einen bestimmten Druck erreicht hat, hebt sich die Membran 2 leicht an und gibt zwischen dem Sitz 3 und der Membran 2 eine Öffnung für das Titriermittel frei. Das Abdeckteil 5 ist mit Öffnungen 11 versehen, welche den Austritt des Titriermittels erlauben.

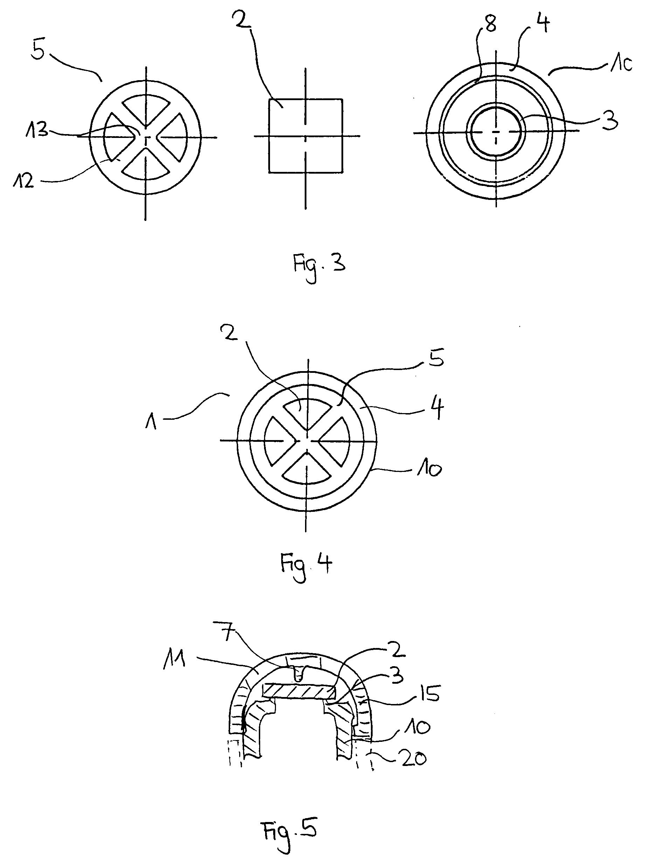

Figur 2 zeigt eine Explosionszeichnung des in Figur 1 gezeigten Mikroventils. Der Ventilkörper 10 und das Abdeckteil 5 können als Spritzgussteile hergestellt werden. Zur Herstellung des Mikroventils 1 wird die Membran 2 in den Ventilkörper 10 eingesetzt und auf den Sitz 3 gelegt. Die Membran 2 wird auf dem Sitz 3 mit dem Abdeckteil 5 fixiert und abgedeckt.

In Figur 3 ist eine Draufsicht auf die drei Bestandteile des Mikroventils 1 aus Figur 2 gezeigt. Der Ventilkörper 10 und das Abdeckteil 5 sind rund ausgebildet, während die Membran 2 quadratisch ist. Die quadratische Ausbildung der Membran 2 erlaubt ein besonders einfaches Einsetzen und Zentrieren der Membran auf dem Sitz 3 bzw. innerhalb der Ringwand 4 des Ventilkörpers 10.

Im rechten Teil von Figur 3 ist der mit einer Vertiefung 8 versehene Ventilkörper 10 zu sehen. Das in der linken Seite von Figur 3 gezeigte Abdeckteil 5 wird innerhalb der Ringwand 4 des Ventilkörpers 10 eingesetzt und liegt auf der Auflagefläche 9 der Vertiefung 8 auf. Das Abdeckteil 5 ist als Kreisring ausgebildet, welcher mit durch das Zentrum 13 des Kreisrings verlaufenden Stegen 12 versehen ist. Die Stege tragen (den in Figur 3 nicht sichtbaren) Vorsprung 7 zum Anpressen der Membran.

Figur 4 zeigt eine Draufsicht auf das zusammengesetzte Mikroventil 1. Die Membran 2 wird vom Abdeckteil 5 teilweise überdeckt und von der Ringwand 4 umschlossen.

Das Mikroventil 1 kann in Spritzgusstechnik hochpräzise hergestellt werden. Als Material für das Abdeckteil und den Ventilkörper werden typischerweise ETFE (Tetzel) verwendet. Die Membran besteht beispielsweise aus FFPM (Kalrez). Mit dem erfindungsgemässen Mikroventil sind Flussraten zwischen 0,001 ml und 170 ml pro Minute erzielbar. Die Dimensionen des Ventils bewegen sich typischerweise im Millimeterbereich. Das Abdeckteil kann einen Aussendurchmesser von etwa 3 mm bis 5 mm aufweisen. Der Ventilkörper weist einen Aussendurchmesser von ca. 5 mm und eine Höhe von etwa 2 mm auf. Die Membran ist quadratisch ausgebildet und hat typischerweise eine Seitenlänge von 2 mm bis 3 mm.

Die Dicke der Membran und das Material der Membran sind zur Erzielung einer bestimmten Vorspannung wesentlich. Typischerweise weist die Membran eine Dicke von ein paar Zenteln Millimetern auf.

In Figur 5 ist ein alternatives Ausführungsbeispiel einer Abdeckung 15 gezeigt. Der Ventilkörper 10 weist im Gegensatz zum Ausführungsbeispiel aus Figur 1 keine umlaufende Ringwand auf. Die Abdeckung 15 ist als kuppelartige Abdeckkappe ausgebildet, welche mit Öffnungen 11 für den Durchlass eines Titriermittels versehen ist. Die Abdeckung 15 umrandet und deckt gleichzeitig die Membran 2 und den Sitz 3. Die Abdeckung 15 ist auf den Ventilkörper 10 aufgesetzt und rastet auf dessen Aussenseite ein.

Mit der erfindungsgemässen Konstruktion eines Mikroventils wird die Membran und der Sitz zuverlässig vor Beschädigungen geschützt. Ausserdem ist der konstruktive Aufbau des Mikroventils mit der zwischen zwei Teilen eingeklemmten Membran äusserst einfach.

## Patentansprüche

1. Mikroventil (1) zum Dosieren einer Flüssigkeit, insbesondere eines Titriermittels mit einer Membran (2) und einem Sitz (3) für die Membran (2),
gekennzeichnet, durch eine Abdeckung (4, 5; 15) zum Schutz der Membran (2) und des Sitzes (3) vor mechanischen Beschädigungen, welche die Membran (2) und den Sitz (3) wenigstens teilweise abdeckt.

2. Mikroventil nach Anspruch 1, dadurch gekennzeichnet, dass die Abdeckung (4, 5) eine umlaufende Ringwand (4), welche die Membran (2) und den Sitz (3) umschliesst, aufweist.

3. Mikroventil nach Anspruch 1 oder 2, dadurch gekennzeichnet, dass die Abdeckung (4, 5; 15) ein Abdeckteil (5) aufweist, welches die Oberfläche der Membran wenigstens teilweise abdeckt.

4. Mikroventil nach Anspruch 3, dadurch gekennzeichnet, dass die Membran (2) durch das Abdeckteil (5) gegen den Sitz (3) gedrückt wird.

5. Mikroventil nach Anspruch 4, dadurch gekennzeichnet, dass das Abdeckteil (5) in einem mittigen Bereich (6) einen Vorsprung (7) zum Andrücken der Membran (2) gegen den Sitz (3) aufweist.

6. Mikroventil nach einem der Ansprüche 3 bis 5, dadurch gekennzeichnet, dass das Abdeckteil (5) an der Ringwand (4) einrastbar ist.

7. Mikroventil nach Anspruch 6, dadurch gekennzeichnet, dass die Ringwand (4) eine Vertiefung (8) mit einer Auflagefläche (9) zur Aufnahme des Abdeckteils (5) aufweist, und dass die Ringwand (4) über das Abdeckteil (5) vorsteht.

8. Mikroventil nach einem der Ansprüche 3 bis 7, dadurch gekennzeichnet, dass das Mikroventil aus dem Abdeckteil (5) und aus einem den Sitz (3) aufweisenden Ventilkörper (10) besteht, zwischen welchen die Membran (2) gehalten ist.

9. Mikroventil nach Anspruch 8, dadurch gekennzeichnet, dass der Ventilkörper (10) und das Abdeckteil (5) je als einstückige Kunststoffspritzgussteile ausgebildet sind.

10. Mikroventil nach einem der Ansprüche 2 bis 8, dadurch gekennzeichnet, dass das Abdeckteil (5) als Scheibe ausgebildet ist, welche mit durch das Zentrum (13) verlaufenden Stegen (12) versehen ist.

11. Mikroventil nach einem der Ansprüche 1 bis 9, dadurch gekennzeichnet, dass die Membran (2) quadratisch ausgebildet ist.

12. Verwendung eines Mikroventils nach einem der Ansprüche 1 bis 11 zum Dosieren eines Titriermittels.
